# EUROPEAN PATENT SPECIFICATION

(11) **EP 4 501 860 B1**
(45) Date of publication and mention of the grant of the patent: **22.04.2026**
(21) Application number: 24192662.5
(22) Date of filing: 02.08.2024
(51) Int. Cl.: C01G 53/50, H01M 4/505, H01M 4/525, H01M 4/131, H01M 10/0525

(54) **POSITIVE ELECTRODE ACTIVE MATERIAL, POSITIVE ELECTRODE, AND RECHARGEABLE LITHIUM BATTERIES**
POSITIVELEKTRODENAKTIVMATERIAL, POSITIVELEKTRODE UND WIEDERAUFLADBARE LITHIUMBATTERIEN
MATÉRIAU ACTIF D'ÉLECTRODE POSITIVE, ÉLECTRODE POSITIVE ET BATTERIES AU LITHIUM RECHARGEABLES

(30) Priority: 03.08.2023 KR 20230101765
(43) Date of publication of application: 05.02.2025
(73) Proprietor: SAMSUNG SDI CO., LTD., Giheung-gu Yongin-si, Gyeonggi-do 17084 (KR)
(72) Inventor: KIM, Young-Ki, 17084 Yongin-si (KR); CHOO, Sung Ho, 17084 Yongin-si (KR); KONG, Youngsun, 17084 Yongin-si (KR); KANG, Seok Mun, 17084 Yongin-si (KR); YOON, Jaesang, 17084 Yongin-si (KR); DOO, Sungwook, 17084 Yongin-si (KR); KANG, Gwiwoon, 17084 Yongin-si (KR); JUN, Dowook, 17084 Yongin-si (KR); KANG, Byungwuk, 17084 Yongin-si (KR); JEONG, Jaeyong, 17084 Yongin-si (KR)
(74) Representative: Marks & Clerk LLP

(56) References cited:
- EP-A1- 4 071 846
- CN-A- 109 755 484
- CN-A- 113 991 102

## Description

### BACKGROUND

### 1. Field

One or more embodiments of the present disclosure relate to positive electrode active materials, positive electrodes including the positive electrode active material, and rechargeable lithium batteries including the positive electrode.

### 2. Description of Related Art

A portable information device (such as a cell phone, a laptop, smart phone, and/or the like) and/or an electric vehicle has utilized a rechargeable lithium battery having relatively high energy density and relatively easy portability as a driving power source. Recently, research has been actively conducted to utilize a rechargeable lithium battery with relatively high energy density as a driving power source for hybrid and/or electric vehicles and/or as a power storage power source for home power storage units and/or power walls.

Various positive electrode active materials have been investigated to realize rechargeable lithium batteries for such desired applications. Among them, lithium nickel-based oxide, lithium nickel manganese cobalt composite oxide, lithium nickel cobalt aluminium composite oxide, and lithium cobalt-based oxide are mainly utilized as positive electrode active materials. EP 4 071 846 A1 discloses a positive electrode material for a secondary battery comprising a first lithium nickel-manganese transition metal oxide being polycrystalline and a second lithium nickel-manganese transition metal oxide being in the form of single crystals, both transition metals being cobalt-containing. Said document discloses the coating of the single crystal particles with boron, or, in the alternative, mixtures of boron and aluminum, or aluminum and titanium. However, while demands and utilizations for large-sized, relatively high-capacity, or relatively high-energy-density rechargeable lithium batteries have recently increased rapidly, the supply of positive electrode active materials containing cobalt, a rare metal, is expected to be severely in short supply. For example, because cobalt is expensive and there are not many remaining reserves, there is a need and desire to develop positive electrode active materials that exclude cobalt or reduce its content (e.g., amount).

### SUMMARY

One or more aspects of embodiments of the present disclosure are directed toward a positive electrode active material including lithium nickel-manganese composite oxide, which reduces the cost (e.g., price) of the positive electrode material while securing relatively high capacity and relatively high energy density characteristics, and improves high-voltage performance by suppressing or reducing side reactions with an electrolyte at relatively high voltage, a positive electrode including the positive electrode active material, and a rechargeable lithium battery including the positive electrode. Additional aspects will be set forth in part in the description which follows and, in part, will be apparent from the description, or may be learned by practice of the presented embodiments of the disclosure.

The positive electrode active material of the invention is as recited in appended claim 1.

In one or more embodiments, a positive electrode includes a positive electrode current collector and a positive electrode active material layer on the positive electrode current collector, wherein the positive electrode active material layer includes the aforementioned positive electrode active material.

In one or more embodiments, a rechargeable lithium battery includes the positive electrode, a negative electrode, and an electrolyte.

The invention is defined in the appended independent claims. Preferred embodiments are recited in the appended dependent claims.

The positive electrode active material according to one or more embodiments increases or maximizes capacity while minimizing or reducing production cost, ensures long cycle-life characteristics, and suppresses side reactions with an electrolyte that can operate at relatively high voltage. A rechargeable lithium battery utilizing the positive electrode active material may exhibit relatively high initial charge/discharge capacity and efficiency even under relatively high-voltage operating conditions and may achieve long cycle-life characteristics.

### BRIEF DESCRIPTION OF DRAWINGS

The above and other aspects, features, and advantages of certain embodiments of the present disclosure will be more apparent from the following description taken in conjunction with the accompanying drawings.
FIG. 1 is a schematical view schematically showing a lithium rechargeable battery according to one or more embodiments of the present disclosure.
FIG. 2 is a scanning electron microscopy (SEM) image of the first positive electrode active material of Example 1 of the present disclosure.
FIG. 3 is an SEM image of the second positive electrode active material of Example 1 of the present disclosure.

### DETAILED DESCRIPTION

Hereinafter, example embodiments will be described in more detail so that those of ordinary skill in the art may easily implement them. However, the present disclosure may be embodied in many different forms and is not construed as limited to the example embodiments set forth herein.

The terminology utilized herein is utilized to describe embodiments only, and is not intended to limit the present disclosure. As used herein, the singular forms "a," "an," and "the" are intended to include the plural forms as well, unless the context clearly indicates otherwise. Further, the utilization of "may" when describing embodiments of the present disclosure refers to "one or more embodiments of the present disclosure".

As utilized herein, "combination thereof" may refer to a mixture, a laminate, a composite, a copolymer, an alloy, a blend, a reaction product, and/or the like of the constituents.

Herein, it should be understood that terms such as "comprise(s)/comprising," "include(s)/including," or "have/has/having" are intended to designate the presence of an embodied feature, number, operation, element, and/or a (e.g., any suitable) combination thereof, but it does not preclude the possibility of the presence or addition of one or more other features, numbers, operations, elements, and/or a (e.g., any suitable) combination thereof.

In the drawings, the thickness of layers, films, panels, regions, and/or the like, may be exaggerated for clarity, and like reference numerals designate like elements throughout the present disclosure, and duplicative descriptions thereof may not be provided for conciseness. It will be understood that if (e.g., when) an element such as a layer, film, region, or substrate is referred to as being "on" another element, it may be directly on the other element or intervening elements may also be present. In contrast, if (e.g., when) an element is referred to as being "directly on" another element, there are no intervening elements present.

In one or more embodiments, "layer" herein includes not only a shape or a film formed on the whole surface if (e.g., when) viewed from a plan view, but also a shape or a film formed on a partial surface.

In one or more embodiments, an average particle diameter may be measured by a method well suitable (e.g. known) to those skilled in the art, for example, may be measured by a particle size analyzer, for example, HORIBA, LA-950 laser particle size analyzer, or may be measured by a transmission electron microscope (TEM) or a scanning electron microscope (SEM). In one or more embodiments, it may obtain an average particle diameter value by measuring it utilizing a dynamic light scattering method, performing data analysis, counting the number of particles for each particle size range, and calculating from the data. Unless otherwise defined, the average particle diameter may refer to the diameter (D₅₀) of particles having a cumulative volume of 50 volume% in a particle size distribution. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In one or more embodiments, as utilized herein, if (e.g., when) a definition is not otherwise provided, the average particle diameter refers to a diameter (D₅₀) of particles having a cumulative volume of 50 volume% in the particle size distribution that is obtained by measuring the size (diameter or length of the major axis) of about 20 particles at random in a scanning electron microscopic image. In the present disclosure, when particles are spherical, "diameter" indicates an average particle diameter, and when the particles are non-spherical, the "diameter" indicates a major axis length.

Herein, "or" is not to be construed as an exclusive meaning, for example, "A or B" is construed to include A, B, A+B, and/or the like. Further, as utilized herein, the term "and/or" includes any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

As utilized herein, the term "metal" is interpreted as a concept including ordinary metals, transition metals, and metalloids (semi-metals).

### Positive Electrode Active Material

In one or more embodiments, a positive electrode active material includes a first positive electrode active material including a lithium nickel-manganese composite oxide having a nickel content (e.g., amount) of greater than or equal to 60 mol% based on 100 mol% of a total metal excluding lithium included in the first positive electrode active material and being in a form of a plurality of secondary particles each including a plurality of primary particles (e.g., made by agglomerating a plurality of primary particles), and a second positive electrode active material including a lithium nickel-manganese-based composite oxide having a nickel content (e.g., amount) of greater than or equal to 60 mol% based on 100 mol% of a total metal excluding lithium in the second positive electrode active material and being in a form of a plurality of single non-agglomerated particles (e.g., each being in the form of a monolithic particle), wherein the second positive electrode active material includes a coating layer on (e.g., arranged on) a surface of each of the single particles and containing aluminium and yttrium, and an aluminium content (e.g., amount of aluminium) of the coating layer is 0.1 mol% to 2 mol% and an yttrium content (e.g., amount of yttrium) of the coating layer is 0.1 mol% to 1 mol%, based on 100 mol% of a total metal excluding lithium in the second positive electrode active material. Based on a total weight, 100 wt%, of the first positive electrode active material and the second positive electrode active material, the first positive electrode active material is in an amount of 60 wt% to 95 wt%, and the second positive electrode active material is in an amount of 5 wt% to 40 wt%. The lithium nickel-manganese composite oxide of the first positive electrode active material and the lithium nickel-manganese composite oxide of the second positive electrode active material are each independently represented by Chemical Formula 1:

Chemical Formula 1 Liₐ₁Niₓ₁Mn_{y1}Al_{z1}M¹_{w1}O_{2-b1}X_{b1},

in Chemical Formula 1, 0.9 ≤ a1 ≤ 1.8, 0.6 ≤ x1 ≤ 0.8, 0.1 ≤ y1 ≤ 0.4, 0 ≤ z1 ≤ 0.03, 0 ≤ w1 ≤ 0.3, 0.9 ≤ x1+y1+z1+w1 ≤ 1.1, 0 ≤ b1 ≤ 0.1, M¹ being one or more elements selected from among B, Ba, Ca, Ce, Cr, Fe, Mg, Mo, Nb, Si, Sn, Sr, Ti, V, W, and Zr, and X being one or more elements selected from among F, P, and S.

As utilized herein, the term "metal" is interpreted as a concept including ordinary metals, transition metals, and metalloids (semi-metals). As the price of cobalt, a rare metal, has recently risen sharply, there is a demand and desire for the development of positive electrode active materials that exclude cobalt or reduce its content (e.g., amount). Among those positive electrode active materials, a positive electrode active material having an olivine crystal structure such as lithium iron phosphate (LFP), lithium manganese phosphate (LMP), lithium manganese iron phosphate (LMFP), and/or the like or a spinel crystal structure such as lithium manganese oxide (LMO) and/or the like has a limitation in realizing relatively high capacity due to a small/low available lithium amount within the structure thereof. The layered nickel-manganese positive electrode active material has excellent or suitable capacity and efficiency characteristics due to the relatively high available lithium capacity in its structure, making it suitable as a material for relatively high-capacity batteries. However, as cobalt, which plays a key role in the layered structure, is removed, structural stability decreases, resistance increases, and it becomes difficult to secure long cycle-life characteristics. In addition, the layered nickel-manganese positive electrode active material, from which cobalt is excluded, may have a problem of accelerated side reaction with an electrolyte under relatively high voltage and relatively high temperature conditions, resultantly increasing gas generation and deteriorating cycle-life characteristics of the associated batteries.

In one or more embodiments of the present disclosure, a mixture of a first positive electrode active material including a lithium nickel-manganese composite oxide in the form of secondary particles and a second positive electrode active material in the form of single particles is applied, and a certain coating material of the present disclosure is applied at a certain content (e.g., amount) of one or more embodiments to either the second positive electrode active material, or each of the first positive electrode active material and the second positive electrode active material, to propose a positive electrode active material exhibiting relatively high capacity and relatively high energy density, relatively long cycle-life, and improved high-voltage performance.

An average particle diameter (D₅₀) of secondary particles of the first positive electrode active material may be larger than an average particle diameter (D₅₀) of single particles of the second positive electrode active material. Herein, the first positive electrode active material may be expressed as large particles, while the second positive electrode active material may be expressed as small particles. By properly mixing large particles in the form of secondary particles and single particles, the capacity and energy density of the nickel-manganese-based positive electrode may be maximized or increased and its cycle-life characteristics and durability may be improved.

In one or more embodiments, the average particle diameter refers to a diameter of particles (D₅₀) having a cumulative volume of 50 volume% in a particle size distribution that is obtained by measuring the size (diameter or length of the major axis) of about 20 particles at random in a scanning electron microscopic image.

In one or more embodiments, the average particle diameter (D₅₀) of the secondary particles of the first positive electrode active material may be, for example, about 10 micrometer (µm) to about 20 µm, about 10 µm to about 18 µm, or about 12 µm to about 16 µm. The average particle diameter (D₅₀) of the single particles of the second positive electrode active material may be, for example, about 0.5 µm to about 8 µm, about 1 µm to about 7 µm, about 1.5 µm to about 6 µm, or about 2 µm to about 5 µm. When the average particle diameter of each positive electrode active material satisfies the above ranges, relatively high capacity and relatively high energy density may be achieved.

In one or more embodiments, the first positive electrode active material may be included in an amount of about 60 wt% to about 95 wt%, for example, about 70 wt% to about 90 wt%, based on a total weight, 100 wt%, of the first positive electrode active material and the second positive electrode active material. The second positive electrode active material may be included in an amount of about 5 wt% to about 40 wt%, for example, about 10 wt% to about 30 wt%, based on the total weight, 100 wt%, of the first positive electrode active material and the second positive electrode active material. When the mixing ratio of the first and second positive electrode active materials satisfies the above range, energy density may be increased while maximizing or increasing capacity.

The lithium nickel-manganese composite oxide of the first positive electrode active material and the lithium nickel-manganese composite oxide of the second positive electrode active material may be the same or different from each other. A nickel content (e.g., amount) in each lithium nickel-manganese composite oxide is 60 mol% to 80 mol%, 65 mol% to 80 mol%, 70 mol% to 80 mol%, 60 mol% to 79 mol%, 60 mol% to 78 mol%, or 60 mol% to 75 mol%, based on 100 mol% of a total metal excluding lithium in the lithium nickel-manganese composite oxide. If the nickel content (e.g., amount) satisfies the above ranges, relatively high capacity may be achieved and structural stability may be increased even if the cobalt content (e.g., amount) is reduced.

For example, in one or more embodiments, a manganese content (e.g., amount) may be greater than or equal to 15 mol%, for example, 15 mol% to 40 mol%, 15 mol% to 35 mol%, 15 mol% to 30 mol%, or 20 mol% to 30 mol%, based on 100 mol% of a total metal excluding lithium in the lithium nickel-manganese composite oxide. If the manganese content (e.g., amount) satisfies the above ranges, the positive electrode active material may improve structural stability while realizing relatively high capacity.

In one or more embodiments, the layered lithium nickel-manganese-based composite oxide in each of the first and second positive electrode active materials may be a lithium nickel-manganese-aluminium-based composite oxide that further includes aluminium in addition to nickel and manganese. If the composite oxide includes aluminium, it is advantageous to maintain a stable layered structure even if the cobalt element is excluded from the structure. The aluminium content (e.g., amount), based on 100 mol% of a total metal excluding lithium in the lithium nickel-manganese-aluminium-based composite oxide, may be greater than or equal to 0.1 mol%, greater than or equal to 0.5 mol%, or greater than or equal to 1 mol%, for example, 1 mol% to 3 mol%, 1 mol% to 2.5 mol%, 1 mol% to 2 mol%, or 1 mol% to 1.9 mol%. If the aluminium content (e.g., amount) satisfies the above ranges, a stable layered structure may be maintained even if cobalt is excluded, the problem of structure collapse due to charging and discharging may be suppressed or reduced, and long cycle-life characteristics of the positive electrode active material may be realized.

The lithium nickel-manganese composite oxide of the first positive electrode active material and the lithium nickel-manganese composite oxide of the second positive electrode active material are each independently represented by Chemical Formula 1.

**Chemical Formula 1** **Liₐ₁Niₓ₁Mn_{y1}Al_{z1}M¹_{w1}O_{2-b1}X_{b1}**

In Chemical Formula 1, 0.9 ≤a1 ≤ 1.8, 0.6≤x1 ≤ 0.8, 0.1 ≤ y1 ≤ 0.4, 0 ≤ z1 ≤ 0.03, 0 ≤ w1 ≤ 0.3, 0.9 ≤ x1+y1+z1+w1 ≤ 1.1, and 0 ≤ b1 ≤ 0.1, M¹ may be one or more elements selected from among boron (B), barium (Ba), calcium (Ca), cerium (Ce), chromium (Cr), iron (Fe), magnesium (Mg), molybdenum (Mo), niobium (Nb), silicon (Si), tin (Sn), strontium (Sr), titanium (Ti), vanadium (V), tungsten (W), and zirconium (Zr), and X may be one or more elements selected from among fluorine (F), phosphorous (P), and sulfur (S).

In Chemical Formula 1, in some embodiments, 0.9 ≤ a1 ≤ 1.5, or 0.9 ≤ a1 ≤ 1.2. In one or more embodiments, the lithium nickel-manganese composite oxide represented by Chemical Formula 1 may include aluminium, in these embodiments, it may satisfy 0.6≤x1 ≤ 0.8, 0.1 ≤ y1 ≤ 0.39, 0.01 ≤ z1 ≤ 0.03, and 0 ≤ w1 ≤ 0.29, for example, 0.6≤x1≤0.8, 0.1 ≤ y1 ≤ 0.39, 0.01<z1 ≤ 0.03, and 0 ≤ w1 ≤ 0.29.

In Chemical Formula 1, for example, in some embodiments, 0.6 ≤ x1 ≤ 0.79, 0.6 ≤ x1 ≤ 0.78, 0.6≤x1 ≤ 0.75, 0.65 ≤ x1 ≤ 0.8, or 0.7 ≤ x1 ≤ 0.79; 0.1 ≤ y1 ≤ 0.35, 0.1 ≤ y1 ≤ 0.30, 0.1 ≤ y1 ≤ 0.29, 0.15 ≤ y1 ≤ 0.39, or 0.2 ≤ y1 ≤ 0.3; 0.01 ≤ z1 ≤ 0.025, 0.01<z1 ≤ 0.02, or 0.01 <z1 ≤ 0.019; and 0 ≤ w1 ≤ 0.28, 0≤w1 ≤ 0.27, 0≤w1 ≤ 0.26, 0 ≤ w2 ≤ 0.25, 0≤w1 ≤ 0.24, 0≤w1 ≤ 0.23, 0 ≤ w1 ≤ 0.22, 0≤w1 ≤ 0.21, 0 ≤ w1 ≤ 0.2, 0 ≤ w1 ≤ 0.15, 0≤w1 ≤ 0.1, or 0 ≤ w1 ≤ 0.09.

The lithium nickel-manganese-based composite oxide does not include cobalt.

### First Positive Electrode Active Material

In one or more embodiments, a concentration of aluminium in the secondary particles of the first positive electrode active material (excluding an optional coating layer) may be substantially uniform. For example, the aluminium may be uniformly (substantially uniformly) dispersed in the particles without a concentration gradient from the center of each of the particles to the surface of the each of the particles or without a concentration difference inside and outside the particle (e.g., between particles). Accordingly, the positive electrode active material may be prepared by not additionally doping the aluminium but utilizing an aluminium raw material to prepare a precursor, wherein the nickel-manganese-aluminium-based hydroxide may be utilized as the precursor and synthesize a composite oxide. For example, an aluminium content (e.g., amount) inside primary particles may be equal or similar regardless of locations of the primary particles. If a primary particle is selected at a random position in the cross section of a secondary particle and the aluminium content (e.g., amount) is measured inside the primary particle rather than at its interface, regardless of the location of the primary particle, that is, whether the primary particle is close to the center of the secondary particle or close to the surface of the secondary particle, the aluminium content (e.g., amount) may be the same/similar/substantially uniform. In such a structure, a stable layered structure may be maintained even if cobalt is absent and aluminium by-products or aluminium aggregates are not generated, so that the capacity, efficiency, and cycle-life characteristics of the positive electrode active material may be improved at the same time.

The first positive electrode active material according to one or more embodiments may further include a coating layer on (e.g., located on) the surface of each of the secondary particles and containing aluminium and zirconium. The first positive electrode active material may include an aluminium-zirconium-rich layer on the surface to effectively suppress or reduce a side reaction with an electrolyte solution at a relatively high voltage and thereby, improve capacity and cycle-life characteristics at the relatively high voltage.

The aluminium content (e.g., amount of aluminium) of the coating layer may be about 0.1 mol% to about 2 mol% based on 100 mol% of a total metal excluding lithium in the first positive electrode active material. In one or more embodiments, the aluminium content (e.g., amount) of the coating layer in the first positive electrode active material may be, for example, about 0.2 mol% to about 1.9 mol%, about 0.3 mol% to about 1.8 mol%, about 0.5 mol% to about 1.5 mol%, or about 0.8 mol% to about 1.3 mol%. The content (e.g., amount) of aluminium in the coating layer may be measured, for example, through SEM-EDS analysis of the surface or cross section of the positive electrode active material. If the aluminium content (e.g., amount) in the coating layer satisfies the ranges, the coating layer may be formed to have a substantially uniform and thin thickness, which may not increase resistance of the positive electrode active material but effectively suppress or reduce a side reaction with an electrolyte, improving cycle-life characteristics of a rechargeable lithium battery at a relatively high voltage.

The zirconium content (e.g., amount) of the coating layer in the first positive electrode active material may be, for example, about 0.05 mol% to about 1 mol%, about 0.1 mol% to about 1 mol%, about 0.1 mol% to about 0.9 mol%, about 0.1 mol% to about 0.8 mol%, or about 0.1 mol% to about 0.6 mol%, based on 100 mol% of a total metal excluding lithium in the first positive electrode active material. The content (e.g., amount) of zirconium in the coating layer may be measured, for example, through SEM-EDS analysis of the surface or cross section of the positive electrode active material. If the zirconium content (e.g., amount) satisfies the ranges, a satisfactory coating layer may be formed without deteriorating capacity of the positive electrode active material or increasing resistance but effectively suppressing or reducing the side reaction with the electrolyte, additionally improving capacity characteristics and cycle-life characteristics under relatively high-voltage operating conditions.

In one or more embodiments, the coating layer of the first positive electrode active material may further include yttrium in addition to aluminium and zirconium, and in these embodiments, the content (e.g., amount) of yttrium may be about 0.1 mol% to about 1 mol% based on 100 mol% of a total metal excluding lithium of the first positive electrode active material.

The coating layer of the first positive electrode active material may be in a form of a film that continuously surrounds the surface of the secondary particle, for example, may be in a form of a shell that surrounds the entire surface of the secondary particle. This is distinct from a structure in which only portion of the surface of the secondary particle is partially coated. According to one or more embodiments, the coating layer may be formed to entirely cover the surface of the secondary particle and may be formed to be very thin and substantially uniform in thickness, and therefore the positive electrode active material does not increase resistance and/or decrease capacity, improves structural stability, effectively suppresses side reactions with electrolytes, reduces the amount of gas generated under relatively high-voltage and relatively high-temperature conditions, and achieves long cycle-life characteristics.

In one or more embodiments, a thickness of the coating layer of the first positive electrode active material may be about 30 nanometers (nm) to about 500 nm, for example, about 30 nm to about 450 nm, about 30 nm to about 400 nm, about 30 nm to about 350 nm, about 30 nm to about 300 nm, about 30 nm to about 250 nm, about 30 nm to about 200 nm, about 30 nm to about 150 nm, about 50 nm to about 500 nm, about 80 nm to about 500 nm, or about 100 nm to about 500 nm. If the coating layer satisfies the thickness range, the structural stability of the positive electrode active material may be improved without increasing resistance and/or reducing capacity due to the coating, and the side reaction with the electrolyte may be effectively suppressed or reduced. The thickness of the coating layer may be measured through, for example, time-of-flight secondary ion mass spectrometry (TOF-SIMS), X-ray photoelectron spectroscopy (XPS), or energy dispersive spectroscopy (EDS) analysis, for example, through TEM-EDS line profile.

The coating layer of the first positive electrode active material may be thin and substantially uniform in thickness, at the level of tens to hundreds of nanometers. For example, in one or more embodiments, the deviation in coating layer thickness within one positive electrode active material particle (e.g., the secondary particle) may be less than or equal to about 20%, less than or equal to about 18%, or less than or equal to about 15%. Herein, the deviation in coating layer thickness refers to the deviation of the coating layer thickness within one positive electrode active material particle. For example, the deviation of the coating layer thickness may be calculated by measuring the thickness of about 10 points in an electron microscopic image of the cross-section of a single positive electrode active material particle to calculate an arithmetic average, and then dividing the absolute value of the difference between one measured data and the arithmetic mean value by the arithmetic mean value and multiplying by 100. The fact that the deviation or standard deviation of the coating layer thickness satisfies the above range refers to that a coating layer of substantially uniform thickness is well formed in a form of a film on the surface of the positive electrode active material particle. Accordingly, the structural stability of the positive electrode active material is improved, side reactions with the electrolyte are effectively suppressed or reduced, and the increase in resistance and/or decrease in capacity due to coating may be minimized or reduced.

In one or more embodiments, during the coating layer formation process, aluminium may diffuse into the secondary particles. Accordingly, the positive electrode active material according to one or more embodiments may further include a grain boundary coating portion containing aluminium and located on the surface of each of the primary particles inside each of the secondary particles. The internal portion of the secondary particle may refer to the entire internal portion excluding the surface of the secondary particle, or the internal portion may be a region from the center of the secondary particle to the surface of the secondary particle, up to about 60 length% of the radius i.e. the distance from the surface of the secondary particle to the center of the secondary particle. The grain boundary coating is a concept that is distinct from the coating layer on the surface of the secondary particle, and refers to the coating portion formed on the surface of each of the primary particles inside each of the secondary particles. The presence of a grain boundary coating portion may be confirmed through SEM-EDS analysis of the cross-section of the positive electrode active material. By forming (or providing) the aluminium grain boundary coating portion, the positive electrode active material may become more structurally stable and its cycle-life characteristics may be improved.

The aluminium content (e.g., amount) in the grain boundary coating portion is not particularly limited, and for example, in some embodiments, the aluminium content (e.g., amount) in the grain boundary coating portion may be less than the aluminium content (e.g., amount) in the coating layer.

In another aspect, in one or more embodiments, the aluminium content (e.g., amount) of the coating layer of the first positive electrode active material may be larger than that of the coating layer of the second positive electrode active material, which will be described in more detail later. For example, in one or more embodiments, the aluminium content (e.g., amount) of the coating layer of the first positive electrode active material and (to) the aluminium content (e.g., amount) of the coating layer of the second positive electrode active material may have a molar ratio of about 5:1 to about 2:1 or about 4:1 to about 2:1. Herein, the aluminium of the coating layer in the first and second positive electrode active materials may not work as resistance but maximize or increase capacity and cycle-life characteristics at a relatively high voltage as well as improve structural stability of each layer.

### Second Positive Electrode Active Material

The single particle of the second positive electrode active material refers to that single particle exists alone without a grain boundary within the particle, is composed of one particle, and has a single particle, a monolith structure, a one body structure, or a non-agglomerated particle, in which particles are not agglomerated with each other but exist as an independent phase in terms of morphology, and may be expressed as a single particle (one body particle, single grain), for example, as a single crystal.

The second positive electrode active material includes a coating layer on (e.g., arranged on) the surface of the single particle and containing aluminium and yttrium, wherein an aluminium content (e.g., amount of aluminium) of the coating layer is about 0.1 mol% to about 2 mol%, and an yttrium content (e.g., amount of yttrium) of the coating layer is about 0.1 mol% to about 1 mol%, based on 100 mol% of a total metal excluding lithium included in the second positive electrode active material. When the coating layer of the second positive electrode active material includes both (e.g., simultaneously) aluminium and yttrium and each satisfies the above content (e.g., amount) ranges, the initial discharge capacity and cycle-life characteristics of the positive electrode active material at relatively high voltage according to one or more embodiments may be maximized or increased.

In one or more embodiments, the aluminium content (e.g., amount) in the coating layer of the second positive electrode active material is about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total metal excluding lithium in the second positive electrode active material. This refers only to the content (e.g., amount) of aluminium included in the coating layer of the second positive electrode active material, excluding a content of the aluminium that may be included within the single particle. The aluminium content (e.g., amount) in the coating layer may be measured, for example, through SEM-EDS analysis of the surface or cross-section of the positive electrode active material. If the aluminium content (e.g., amount) in the coating layer of the second positive electrode active material satisfies the ranges, the coating layer may have a substantially uniform and thin thickness, which may not increase resistance of the positive electrode active material and effectively suppress or reduce a side reaction with the electrolyte and thereby, improve cycle-life characteristics of a rechargeable lithium battery under relatively high-voltage and relatively high-temperature conditions. For example, if the aluminium content (e.g., amount) of the coating layer of the second positive electrode active material is excessive, a substantially uniform coating layer may not be formed or resistance may increase, which may reduce charge/discharge efficiency and cycle-life characteristics, and if the aluminium content (e.g., amount) of the coating layer of the second positive electrode active material is too small, a coating layer of an appropriate or suitable thickness is not formed and an effect of suppressing or reducing side reactions with the electrolyte may be reduced.

In one or more embodiments, the yttrium content (e.g., amount of yttrium) in the coating layer of the second positive electrode active material is about 0.1 mol% to about 1 mol%, for example, about 0.1 mol% to about 0.9 mol%, about 0.1 mol% to about 0.8 mol%, about 0.1 mol% to about 0.6 mol%, about 0.1 mol% to about 0.4 mol%, or about 0.1 mol% to about 0.3 mol%, based on 100 mol% of a total metal excluding lithium in the second positive electrode active material. If the yttrium content (e.g., amount) satisfies the above range, the positive electrode active material forms a good or suitable coating layer without reducing capacity and/or increasing resistance, effectively suppressing or reducing side reactions with the electrolyte and effectively reducing the amount of gas generated under relatively high-voltage or relatively high-temperature conditions are achieved.

The second positive electrode active material includes both (e.g., simultaneously) aluminium and yttrium in the coating layer, and capacity characteristics and cycle-life characteristics at relatively high voltage may be improved compared to an embodiment in which only one of the two is included.

The coating layer of the second positive electrode active material may be in the form of a film that continuously surrounds the surface of a single particle, or, for example, may be in the form of a shell that surrounds the entire surface of the single particle. This is distinct from a structure in which only portion of the surface of the particle is partially coated. The coating layer according to one or more embodiments may be formed to have a very thin and substantially uniform thickness as well as entirely cover the surface of the single particle, which may neither increase resistance of the positive electrode active material nor deteriorate capacity but exhibits improved structural stability and may be effectively suppressed or reduced from a side reaction with the electrolyte, resultantly realizing long cycle-life characteristics at a relatively high voltage.

In one or more embodiments, a thickness of the coating layer of the second positive electrode active material may be about 30 nm to about 500 nm, for example, about 30 nm to about 450 nm, about 30 nm to about 400 nm, about 30 nm to about 350 nm, about 30 nm to about 300 nm, about 30 nm to about 250 nm, about 30 nm to about 200 nm, about 30 nm to about 150 nm, about 50 nm to about 500 nm, about 80 nm to about 500 nm, or about 100 nm to about 500 nm. If the coating layer of the second positive electrode active material satisfies the thickness ranges, the structural stability of the positive electrode active material may be improved without increasing resistance and/or reducing capacity due to the coating, and the side reaction with the electrolyte may be effectively suppressed or reduced. The thickness of the coating layer may be measured through, for example, TOF-SIMS, XPS, or EDS analysis, for example, through TEM-EDS line profile.

The coating layer of the second positive electrode active material is thin and substantially uniform in thickness, in a range of tens to hundreds of nanometers. For example, in one or more embodiments, the deviation in coating layer thickness in one positive electrode active material particle (e.g., the single particle) may be less than or equal to about 20%, less than or equal to about 18%, or less than or equal to about 15%. Herein, the deviation in coating layer thickness refers to the deviation of the coating layer thickness in one positive electrode active material particle. For example, the deviation of the coating layer thickness may be calculated by measuring the thickness of about 10 points in an electron microscopic image of the cross-section of a single positive electrode active material particle to calculate an arithmetic average, and then dividing the absolute value of the difference between one measured data and the arithmetic mean value by the arithmetic mean value and multiplying by 100. The fact that the deviation or standard deviation of the coating layer thickness satisfies the above range refers to that a coating layer of substantially uniform thickness is well formed in a form of a film on the surface of the positive electrode active material particle. Accordingly, the structural stability of the positive electrode active material is improved, side reactions with the electrolyte may be effectively suppressed or reduced, and the increase in resistance and/or decrease in capacity due to coating may be minimized or reduced.

In the coating layer of the second positive electrode active material, the aluminium may exist in the form of a continuous (e.g., substantially continuous) film, and the yttrium may exist in the form of an island shape due to characteristics of each element.

In one or more embodiments, the aluminium and the yttrium may be mixed within one coating layer, wherein the aluminium may exist in the form of a continuous (e.g., substantially continuous) film, while the yttrium may exist in the form of an island shape (e.g., separate islands), but embodiments of the present disclosure are not limited thereto.

In one or more embodiments, the aluminium and the yttrium may each form (or provide) a separate layer. For example, in one or more embodiments, the second positive electrode active material may include a first coating layer containing the aluminium and on (e.g., arranged on) the surface of each of single particles and a second coating layer containing the yttrium and on (e.g., arranged on) the first coating layer. The aluminium is first attached or absorbed on the surface of the single particles to form (or provide) the first coating layer as a thin film, and the yttrium is coated thereon to form (or provide) the second coating layer. Herein, in some embodiments, the aluminium and the yttrium may be mixed in the first coating layer and the second coating layer, but the first coating layer may be an aluminium-rich coating layer containing the aluminium as a primary component, and the second coating layer may be an yttrium-rich coating layer containing the yttrium as a primary component. Herein, in the second coating layer, the yttrium may exist as an island shape (e.g., separate islands) but is not particularly limited thereto.

In one or more embodiments, thicknesses of the first coating layer and the second coating layer are not particularly limited. However, the thickness of the first coating layer may be about 10 nm to about 200 nm, for example, about 20 nm to about 200 nm, about 30 nm to about 200 nm, or about 30 nm to about 180 nm. The thickness of the second coating layer may be about 20 nm to about 300 nm, for example, about 20 nm to about 250 nm, about 20 nm to about 200 nm, about 30 nm to about 300 nm, or about 50 nm to about 300 nm. If each thickness of the first coating layer and the second coating layer satisfies the above range, the structural stability of the positive electrode active material may be improved without increasing resistance and/or decreasing capacity due to the coating, and the cycle-life characteristics at relatively high voltage may be improved by effectively suppressing or reducing side reactions with the electrolyte.

The positive electrode active material is a cobalt-free positive electrode active material.

Additionally, in one or more embodiments, the positive electrode active material may be characterized as not containing sodium. In general, sodium ions may be utilized in a preparing process of a positive electrode active material, but according to the preparing method described in more detail later, positive electrode active material particles with a stable structure and a coating layer of substantially uniform thickness may be formed without utilizing sodium ions.

### Method of Preparing Positive Electrode Active Material

In one or more embodiments, a method of preparing a positive electrode active material may include (i) mixing a nickel-manganese-based composite hydroxide having a nickel content (e.g., amount of nickel) of greater than or equal to about 60 mol% based on 100 mol% of a total metal of the nickel-manganese-based composite hydroxide and a lithium raw material and performing heat treatment to prepare a first positive electrode active material in the form of secondary particles made by agglomerating a plurality of primary particles, (ii) mixing a nickel-manganese composite hydroxide with a nickel content (e.g., amount of nickel) of greater than or equal to about 60 mol% based on 100 mol% of the total metal of the nickel-manganese-based composite hydroxide and a lithium raw material, followed by heat treatment, to obtain a lithium nickel-manganese composite oxide in the form of single particles, and adding the obtained lithium nickel-manganese composite oxide to a solution of aluminium raw materials and yttrium raw materials in an aqueous solvent, followed mixing, drying, and reheating to prepare a second positive electrode active material, (iii) mixing the first positive electrode active material with the second positive electrode active material. Herein, in the process of preparing the second positive electrode active material, the aluminium content (e.g., amount) in the aluminium raw material is about 0.1 mol% to about 2 mol% based on 100 mol% of a total metal excluding lithium in the second positive electrode active material, and the yttrium content (e.g., amount) in the yttrium raw material is about 0.1 mol% to about 1 mol% based on 100 mol% of a total metal excluding lithium in the second positive electrode active material. The aforementioned positive electrode active material may be manufactured through the method.

In the process of preparing the first positive electrode active material and the second positive electrode active material, the nickel-manganese-based composite hydroxide does not contain cobalt for example, may be a cobalt-free nickel-manganese-based composite hydroxide, for example, cobalt-free nickel-manganese-aluminium composite hydroxide. The nickel-manganese-based composite hydroxide may be prepared by a general coprecipitation method.

The nickel content (e.g., amount) in the nickel-manganese-based composite hydroxide is 60 mol% to 80 mol%, 65 mol% to 80 mol%, or 70 mol% to 80 mol%, 60 mol% to 79 mol%, 60 mol% to 78 mol%, or 60 mol% to 75 mol%, based on 100 mol% of a total metal in the nickel-manganese-based composite hydroxide. If the nickel content (e.g., amount) satisfies the above range, relatively high capacity may be achieved and also structural stability may be increased or maintained even if the cobalt content (e.g., amount) is reduced.

The content (e.g., amount) of manganese in the nickel-manganese-based composite hydroxide may be 10 mol% to 40 mol%, 10 mol% to 39 mol%, 10 mol% to 35 mol%, 10 mol% to 30 mol%, 10 mol% to 29 mol%, about 15 mol% to 39 mol%, 20 mol% to 39 mol%, 20 mol% to 30 mol%, based on 100 mol% of a total metal in the nickel-manganese-based composite hydroxide.

In one or more embodiments, if (e.g., when) the nickel-manganese-based composite hydroxide further contains aluminium, the content (e.g., amount) of aluminium may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol%, based on 100 mol% of a total metal in the nickel-manganese-based composite hydroxide. If the manganese and aluminium contents of the composite hydroxide satisfy the above ranges, relatively high capacity may be realized while structural stability of the positive electrode active material may be increased, and production price may be lowered to increase economic efficiency.

This nickel-manganese-based composite hydroxide may be economical as it avoids the increase in unit cost caused by cobalt, maximizes capacity, and improves structural stability.

As an example, in one or more embodiments, the nickel-manganese-based composite hydroxide may be represented by Chemical Formula 2.

**Chemical Formula 2** **Niₓ₂Mn_{y2}Al_{z2}M²_{w2}(OH)₂**

In Chemical Formula 2, 0.6 ≤ x2 ≤ 0.8, 0.1 ≤ y2 ≤ 0.4, 0 ≤ z2 ≤ 0.03, 0 ≤ w2 ≤ 0.3, and 0.9≤ x2+y2+z2+w2 ≤ 1.1, and M² may be one or more elements selected from among B, Ba, Ca, Ce, Cr, Fe, Mg, Mo, Nb, Si, Sn, Sr, Ti, V, W, and Zr.

In Chemical Formula 2, for example, in some embodiments, 0.6 ≤ x2 ≤ 0.8, 0.1 ≤ y2 ≤ 0.39, 0.01 ≤ z2 ≤ 0.03, 0 ≤ w2 ≤ 0.29.

The nickel-manganese-based composite hydroxide may be in the form of particles, and the average particle diameter (D₅₀) of the particles may be about 10 µm to about 18 µm, about 11 µm to about 16 µm, or about 12 µm to about 15 µm.

In one or more embodiments, in the preparation process of the first positive electrode active material, aluminium is not additionally doped thereon, but an aluminium raw material is utilized to prepare a precursor of nickel-manganese-aluminium-based composite hydroxide, in which the aluminium is evenly dispersed in a structure. Such a precursor may be utilized to prepare a positive electrode active material capable of stably maintaining the layered structure without cobalt despite repeated charges and discharges, in which aluminium byproducts or aluminium aggregates are not formed, resultantly, improving capacity and efficiency characteristics and cycle-life characteristics of the positive electrode active material.

In one or more embodiments, in the process of preparing the first positive electrode active material, the nickel-manganese-based composite hydroxide and lithium raw material may be mixed in a molar ratio of about 1:0.9 to about 1:1.8, for example, about 1:0.9 to about 1:1.5 or about 1:0.9 to about 1:1.2. The heat treatment after mixing may be performed under an oxygen atmosphere, for example, within a temperature range of about 750 °C to about 950 °C, about 780 °C to about 900 °C, or about 810 °C to about 890 °C, for about 2 hours to about 20 hours or about 4 hours to about 12 hours. Through the heat treatment, lithium nickel-manganese-based composite oxide may be obtained.

The obtained lithium nickel-manganese-based composite oxide includes 60 mol% to 80 mol% of nickel based on 100 mol% of a total metal excluding lithium in the lithium nickel-manganese-based composite oxide, but cobalt is not included.

The method of preparing the positive electrode active material according to one or more embodiments may further include obtaining lithium nickel-manganese-based composite oxide in the process of preparing the first positive electrode active material and then coating the obtained lithium nickel-manganese-based composite oxide. The lithium nickel-manganese-based composite oxide has a significantly different residual lithium content (e.g., amount) and different surface characteristics from an oxide with other compositions, for example, a conventional nickel-based oxide such as a lithium nickel-cobalt-manganese-based composite oxide or a lithium nickel-cobalt-aluminium-based composite oxide, and/or the like, conventional coating methods may not succeed in forming (or providing) a good or suitable coating layer thereon in a form of a substantially uniform film. In one or more embodiments, a method is applied to improve relatively high-voltage characteristics by uniformly (substantially uniformly) forming (or providing) a coating layer with a very thin thickness on the surface of a lithium nickel-manganese-based composite oxide with no cobalt and a nickel content (e.g., amount) of greater than or equal to about 60 mol%. For example, the coating layer according to one or more embodiments may be formed by adding and mixing aluminium raw materials to an aqueous solvent, adding and mixing lithium nickel-manganese-based composite oxide, and then drying and reheating the mixture. This may be called a wet coating method.

The aqueous solvent may include distilled water, an alcohol-based solvent, and/or a (e.g., any suitable) combination thereof. The aluminium raw material may include, for example, aluminium nitrate, aluminium sulfate, aluminium carbonate, aluminium hydroxide, and/or a (e.g., any suitable) combination thereof. For example, in one or more embodiments, the aluminium raw material may include aluminium sulfate, and in these embodiments, it is advantageous to form (or provide) a coating layer with a substantially uniform thickness on the surface of the lithium nickel-manganese-based composite oxide particles. An aluminium content (e.g., amount) of the aluminium raw material may be designed to be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total metal excluding lithium in the first positive electrode active material.

A solution obtained by mixing the aluminium raw materials in an aqueous solvent may have a pH of about 1.5 to about 3.5, for example, about 2.0 to about 3.4, about 2.5 to about 3.3, about 2.7 to about 3.3, or about 2.9 to about 3.2. Dropping and mixing the lithium nickel-manganese-based composite oxide into an aqueous solvent mixed with aluminium raw materials may proceed for about 5 minutes to about 80 minutes, about 5 minutes to about 60 minutes, or about 5 minutes to about 40 minutes. After the stirring, the mixed solution may have a pH of about 4.5 to about 8.5, for example, about 5.0 to about 8.0, about 5.5 to about 7.5, or about 6.0 to about 7.0. If these conditions are satisfied, it is advantageous to form (or provide) a coating layer with a substantially uniform thickness.

The reheating may be understood as a process of forming (or providing) a coating layer and may be performed, for example, in an oxygen atmosphere at a temperature range of about 700 °C to about 850 °C, about 750 °C to about 840 °C, or about 800 °C to about 830 °C, for about 2 hours to about 20 hours, or about 3 to about 10 hours.

In order to coat the zirconium in addition to the aluminium, the reheating may be performed by adding a zirconium raw material to a product obtained after the drying. The zirconium raw material may be, for example, zirconium oxide, and may be added so that the zirconium content (e.g., amount) is about 0.05 mol% to about 1 mol% based on about 100 mol% of a total metal excluding lithium in the first positive electrode active material.

Likewise, in a process of preparing the second positive electrode active material, the nickel-manganese-based composite hydroxide and the lithium raw material may be mixed in a molar ratio of about 1:0.9 to about 1:1.8, for example, about 1:0.9 to about 1:1.5, or about 1:0.9 to about 1:1.2. After the mixing, the heat treatment may be performed under an oxygen atmosphere, for example, at about 750 °C to about 950 °C, about 780 °C to about 900 °C, or about 810 °C to about 890 °C, for about 2 hours to about 20 hours or about 4 hours to about 12 hours. Through the heat treatment, the lithium nickel-manganese-based composite oxide may be obtained. The obtained lithium nickel-manganese-based composite oxide includes nickel in an amount of 60 mol% to 80 mol% based on 100 mol% of a total metal excluding lithium in the obtained lithium nickel-manganese-based composite oxide but include no cobalt. In order to obtain the lithium nickel-manganese-based composite oxide in the form of single particles, a pulverization process may be further included.

The coating of the aluminium and yttrium on the second positive electrode active material in the form of single particles also may adopt not a comparable coating method in the relevant art but instead utilize a wet coating method according to one or more embodiments to secure a satisfactory coating layer as a substantially uniform film. For example, the lithium nickel-manganese-based composite oxide in the form of single particles is added to a solution of mixing the aluminium raw material and yttrium raw material in an aqueous solvent and then, dried and reheated to prepare the second positive electrode active material.

More details about the aqueous solvent and the aluminium raw material may each independently be the same as described above. An aluminium content (e.g., amount) of the aluminium raw material is designed to be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol%, based on about 100 mol% of a total metal excluding lithium in the second positive electrode active material. The yttrium raw material may include, for example, yttrium nitrate, yttrium sulfate, yttrium carbonate, yttrium hydroxide, and/or a (e.g., any suitable) combination thereof. An yttrium content (e.g., amount) of the yttrium raw material is designed to be about 0.1 mol% to about 1 mol%, for example, about 0.1 mol% to about 0.9 mol%, about 0.1 mol% to about 0.8 mol%, about 0.1 mol% to about 0.6 mol%, about 0.1 mol% to about 0.4 mol%, or about 0.1 mol% to about 0.3 mol%, based on 100 mol% of a total metal excluding lithium in the second positive electrode active material. Each of the coating raw materials is designed within each range to form (or provide) a coating layer with a substantially uniform and thin thickness in, e.g., the nanometer scale of tens to hundreds of nanometers, which may reduce gas generation of a rechargeable lithium battery under a relatively high-voltage operating condition and improving high capacity and long cycle-life characteristics.

The solution obtained by mixing an aluminium raw material, an yttrium raw material, and/or a (e.g., any suitable) combination thereof in an aqueous solvent may have a pH of about 1.5 to about 3.5, for example, about 2.0 to about 3.4, about 2.5 to about 3.3, about 2.7 to about 3.3, or about 2.9 to about 3.2. The mixing of the lithium nickel-manganese-based composite oxide with the aqueous solvent, in which the aluminium raw material and the yttrium raw material are mixed, may be performed for about 5 minutes to about 80 minutes, about 5 minutes to about 60 minutes, or about 5 minutes to about 40 minutes. After the stirring, the mixed solution may have a pH of about 4.5 to about 8.5, for example, about 5.0 to about 8.0, about 5.5 to about 7.5, or about 6.0 to about 7.0. If these conditions are satisfied, it is advantageous to form (or provide) a coating layer with a substantially uniform thickness.

Drying after the mixing process may be understood as a process of removing the solvent and may be carried out, for example, at about 40 °C to about 240 °C, about 100 °C to about 220 °C, or about 150 °C to about 200 °C. A reheat treatment may be understood as a process of forming (or providing) a coating layer, for example, at about 700 °C to about 850 °C, about 750 °C to about 840 °C, or about 800 °C to about 830 °C under an oxygen atmosphere for about 2 hours to about 20 hours or about 3 hours to about 10 hours. Additionally, the reheat treatment temperature may be lower than the previous heat treatment temperature, and the reheat treatment time may be the same as or shorter than the previous heat treatment time. The desired or suitable coating layer may be obtained by reheat treatment under these conditions.

In some embodiments, a dry coating method may be applied to coating the single particle type second positive electrode active material with aluminium and yttrium. In the dry coating method, coating raw materials may be, for example, aluminium oxide and yttrium oxide.

The first positive electrode active material and the second positive electrode active material are mixed at a weight ratio of about 60:40 to about 95:5, for example, about 70:30 to about 90:10. If mixed in this ratio, capacity and cycle-life characteristics of the positive electrode active material may be improved while maximizing or increasing energy density.

### Positive Electrode

In one or more embodiments, a positive electrode includes a positive electrode current collector and a positive electrode active material layer on the positive electrode current collector, wherein the positive electrode active material layer includes the aforementioned positive electrode active material. In some embodiments, the positive electrode active material layer may further include other types (kinds) of positive electrode active materials in addition to the aforementioned positive electrode active materials. In one or more embodiments, the positive electrode active material layer may optionally further include a binder, a conductive material, and/or a (e.g., any suitable) combination thereof.

According to one or more embodiments, a loading level of the positive electrode active material layer may be about 10 mg/cm² to about 40 mg/cm², for example, about 10 mg/cm² to about 30 mg/cm², or about 10 mg/cm² to about 20 mg/cm². In one or more embodiments, a density of the positive electrode active material layer in the final compressed positive electrode may be about 3.5 g/cc to about 3.7 g/cc, for example, about 3.5 g/cc to about 3.6 g/cc, or about 3.5 g/cc to about 3.58 g/cc. When applying the positive electrode active material according to one or more embodiments, it is advantageous to implement such a loading level and positive electrode density, and a positive electrode that satisfies the loading level and positive electrode density in the above ranges is suitable for implementing a high-capacity, high-energy-density rechargeable lithium battery.

### Binder

The binder improves binding properties of positive electrode active material particles with one another and with the positive electrode current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

### Conductive Material

The conductive material (e.g., electron conductor) may be included to provide electrode conductivity, and any electrically conductive material may be utilized as a conductive material unless it causes a chemical change. Non-limiting examples of the conductive material may include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

Each content (e.g., amount) of the binder and the conductive material may be about 0.5 wt% to about 5 wt% or about 0.5 wt% to about 3 wt%, based on a total weight, 100 wt%, of the positive electrode active material layer.

The positive electrode current collector may include Al, but embodiments of the present disclosure are not limited thereto.

### Rechargeable Lithium Battery

According to one or more embodiments of the present disclosure, a rechargeable lithium battery includes the aforementioned positive electrode, a negative electrode, and an electrolyte.

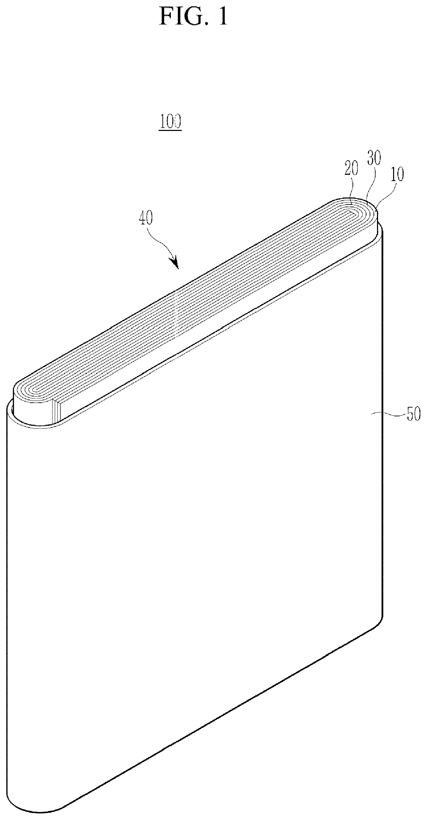

The rechargeable lithium battery may be classified into cylindrical, prismatic, pouch, coin, and/or the like depending on the shape thereof. FIG. 1 is a schematic view illustrating a rechargeable lithium battery according to one or more embodiments. Referring to FIG. 1, the rechargeable lithium battery 100 may include an electrode assembly 40 with a separator 30 interposed between a positive electrode 10 and a negative electrode 20, and a case 50 in which the electrode assembly 40 is housed. The positive electrode 10, negative electrode 20, and separator 30 may be impregnated with an electrolyte.

The rechargeable lithium battery according to one or more embodiments may be rechargeable at a relatively high voltage, or may be suitable for being driven at a relatively high voltage. For example, in one or more embodiments, the charge voltage of the rechargeable lithium battery may be greater than or equal to about 4.45 V, about 4.45 V to about 4.7 V, about 4.45 V to about 4.6 V, or about 4.45 V to about 4.55 V. By applying the positive electrode active material according to one or more embodiments, the rechargeable lithium battery may significantly reduce an amount of gas generated even if (e.g., when) charged at relatively high voltage and may achieve relatively high capacity and long cycle-life characteristics.

### Negative Electrode

The negative electrode may include a negative electrode current collector and a negative electrode active material layer on the negative electrode current collector, and the negative electrode active material layer may include a negative electrode active material, a binder, a conductive material, and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include, for example, crystalline carbon, amorphous carbon, and/or a (e.g., any suitable) combination thereof as a carbon-based negative electrode active material. The crystalline carbon may be irregular, or sheet-shaped, flake-shaped, spherically shaped, or fiber shaped (e.g., in a form of fibers) natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example, magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), thallium (TI), germanium (Ge), phosphorous (P), arsenic (As), antimony (Sb), bismuth (Bi), sulfur (S), selenium (Se), tellurium (Te), polonium (Po), and/or a (e.g., any suitable) combination thereof), and/or a (e.g., any suitable) combination thereof. The Sn-based negative electrode active material may be Sn, SnOₖ (0 < k ≤ 2) (e.g., SnO₂), a Sn alloy, and/or a (e.g., any suitable) combination thereof.

The silicon-carbon composite may be a composite of silicon and amorphous carbon, in a form of particles. An average particle diameter (D₅₀) of the silicon-carbon composite particles (e.g., secondary particles) may be, for example, about 0.5 micron (µm) to about 20 µm. According to one or more embodiments, the silicon-carbon composite may be in the form of silicon particles and amorphous carbon coated on the surface of each of the silicon particles. For example, in some embodiments, the silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may each be coated with amorphous carbon. The secondary particles may exist dispersed in an amorphous carbon matrix.

The silicon-carbon composite may further include crystalline carbon. For example, in one or more embodiments, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and/or calcined coke.

In one or more embodiments, if (e.g., when) the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt%, based on a total weight, 100 wt%, of the silicon-carbon composite. In one or more embodiments, if (e.g., when) the silicon-carbon composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt%, based on a total weight, 100 wt%, of the silicon-carbon composite.

In one or more embodiments, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). In one or more embodiments, the atomic content (e.g., amount) ratio of Si:O, which indicates a degree of oxidation, may be about 99:1 to about 33:67. As utilized herein, if (e.g., when) a definition is not otherwise provided, an average particle diameter (D₅₀) indicates a particle diameter of a particle where an accumulated volume is about 50 volume% in a particle size distribution.

In some embodiments, the Si-based negative electrode active material or Sn-based negative electrode active material may be mixed with the carbon-based negative electrode active material. When the Si-based negative electrode active material or the Sn-based negative electrode active material and the carbon-based negative electrode active material are mixed and utilized, a mixing ratio thereof may be a weight ratio of about 1:99 to about 90:10.

### Binder

The binder serves to well adhere the negative electrode active material particles to each other and also to adhere the negative electrode active material to the negative electrode current collector. The binder may be a non-aqueous (e.g., water-insoluble) binder, an aqueous (e.g., water-soluble) binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous binder is utilized as the binder of the negative electrode, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and utilized. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

In one or more embodiments, the conductive material (e.g., electron conductor) may be included to provide and/or improve electrode conductivity, and any electrically conductive material may be utilized as a conductive material unless it causes a chemical change. Non-limiting examples of the conductive material may include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

A content (e.g., amount) of the negative electrode active material may be about 95 wt% to about 99.5 wt% based on a total weight, 100 wt%, of the negative electrode active material layer, and a content (e.g., amount) of the binder may be about 0.5 wt% to about 5 wt% based on a total weight, 100 wt%, of the negative electrode active material layer. For example, in one or more embodiments, the negative electrode active material layer may include about 90 wt% to about 99 wt% of the negative electrode active material, about 0.5 wt% to about 5 wt% of the binder, and about 0.5 wt% to about 5 wt% of the conductive material, based on the total weight, 100 wt%, of the negative electrode active material layer.

### Negative Electrode Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, a sheet, or a foam. A thickness of the negative electrode current collector may be, for example, about 1 µm to about 20 µm, about 5 µm to about 15 µm, or about 7 µm to about 10 µm.

### Electrolyte

In one or more embodiments, the electrolyte for a rechargeable lithium battery may be an electrolyte, which may include a non-aqueous organic solvent and a lithium salt.

The non-aqueous organic solvent serves as a medium for transmitting ions taking part in the electrochemical reaction of a battery. The non-aqueous organic solvent may be a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether group, and/or the like); amides such as dimethylformamide; dioxolanes such as 1,3-dioxolane, 1,4-dioxolane, and/or the like; sulfolanes, and/or the like.

The non-aqueous organic solvent may be utilized alone or in a mixture of two or more types (kinds), and if (e.g., when) two or more types (kinds) are utilized in a mixture, a mixing ratio may be appropriately or suitably adjusted according to the desired or suitable battery performance, which is widely suitable to those working in the field.

If (e.g., when) utilizing a carbonate-based solvent, a cyclic carbonate and a chain carbonate may be mixed and utilized, and the cyclic carbonate and the chain carbonate may be mixed in a volume ratio of about 1:1 to about 1:9.

In one or more embodiments, the non-aqueous organic solvent may further include an aromatic hydrocarbon-based organic solvent. For example, in some embodiments, a carbonate-based solvent and an aromatic hydrocarbon-based organic solvent may be mixed and utilized in a volume ratio of about 1:1 to about 30:1.

In one or more embodiments, the electrolyte may further include vinylethylene carbonate, vinylene carbonate, or an ethylene carbonate-based compound to improve battery cycle-life.

Non-limiting examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a rechargeable lithium battery, enables a basic operation of the rechargeable lithium battery, and improves transportation of the lithium ions between positive and negative electrodes. Non-limiting examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂), (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte has appropriate or suitable ionic conductivity and viscosity, and thus excellent or suitable performance may be achieved and lithium ions may move effectively.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on one or both (e.g., simultaneously) surfaces (e.g., opposite surfaces) of the porous substrate.

The porous substrate may be a polymer film formed of any one selected from among polymer polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one of a structural unit derived from (meth)acrylic acid or (meth)acrylate, and/or a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (e.g., any suitable) combination thereof, but embodiments of the present disclosure are not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

A thickness of the coating layer may be about 0.5 µm to about 20 µm, for example, about 1 µm to about 10 µm, or about 1 µm to about 5 µm.

Examples and comparative examples of the present disclosure are described in more detail herein. However, the following examples are only examples of the present disclosure, and the present disclosure is not limited to the following examples.

### Example 1

### 1. Preparation of Positive Electrode Active Material

### (1) Preparation of First Positive Electrode Active Material

Ni_{0.75}Mn_{0 23}Al_{0.02}(OH)₂ and LiOH were mixed in a molar ratio of 1:1.05 and then, primarily heat-treated at 850 °C under an oxygen atmosphere for 8 hours to prepare a first composite oxide in a form of secondary particles having a composition of Li_{1.05}Ni_{0.75}Mn_{0.23}Al_{0.02}O₂ and an average particle diameter (D₅₀) of about 14 µm.

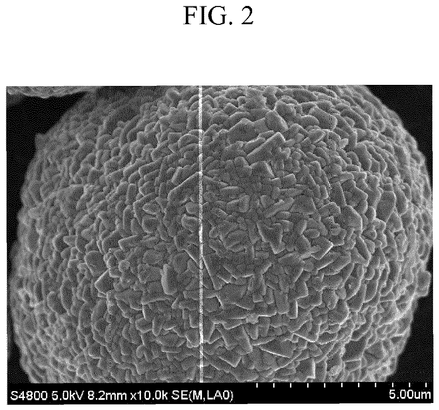

After adding aluminium sulfate to a distilled water solvent, the first composite oxide was added thereto and mixed for about 20 to 60 minutes. Herein, an aluminium content (e.g., amount) of the aluminium sulfate was designed to be 1.0 mol% based on 100 mol% of a total metal excluding lithium in the first positive electrode active material. After removing the solvent from the mixed solution and then, drying the rest at 190 °C, zirconium oxide was dry-mixed therewith and then, secondarily heat-treated at 825 °C for 8 hours under an oxygen atmosphere to obtain a first positive electrode active material. The zirconium content (e.g., amount) of zirconium oxide was designed to be 0.2 mol% based on 100 mol% of a total metal excluding lithium in the final first positive electrode active material. FIG. 2 is a scanning electron micrograph of the prepared first positive electrode active material.

### (2) Preparation of Second Positive Electrode Active Material

Ni_{0.75}Mn_{0.23}Al_{0.02}(OH)₂, LiOH, and Al₂O₃ were mixed in a molar ratio of 1:1:0.02 and heat-treated at 850 °C for 8 hours under an oxygen atmosphere to prepare a second composite oxide having a composition of LiNi_{0.7}Mn_{0.2}Al_{0.02}O₂ in the form of single particles with an average particle diameter (D₅₀) of about 3 µm.

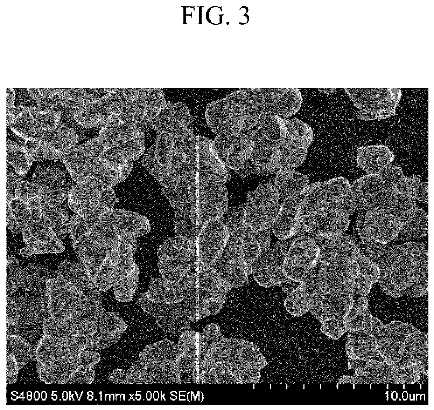

The second composite oxide, Al₂O₃, and Y₂O₃ were mixed and heat treated at 825 °C for 8 hours in an oxygen atmosphere to prepare a second positive electrode active material. Herein, they were mixed so that aluminum content of the coating was 0.4 mol% and the content of yttrium of the coating was 0.1 mol% based on 100 mol% of a total metal excluding lithium in the final second positive electrode active material. FIG. 3 is a scanning electron micrograph of the prepared second positive electrode active material.

### (3) Preparation of Final Positive Electrode Active Material

The final positive electrode active material, i.e., the positive electrode active material, was prepared by mixing the first positive electrode active material and the second positive electrode active material at a weight ratio of 7:3.

### 2. Manufacture of Positive Electrode

98.5 wt% of the positive electrode active material, 1.0 wt% of a polyvinylidene fluoride binder, and 0.5 wt% of a carbon nanotube conductive material were mixed to prepare a positive electrode active material layer slurry, and the positive electrode active material layer slurry was coated on an aluminium foil current collector and then, dried and compressed to manufacture a positive electrode. A density of the final compressed positive electrode was about 3.52 g/cc.

### 3. Manufacture of Rechargeable Lithium Battery Cell

97.5 wt% of a graphite negative electrode active material, 1.5 wt% of carboxymethyl cellulose, and 1 wt% of a styrene butadiene rubber were mixed in a water solvent to prepare a negative electrode active material layer slurry. The negative electrode active material layer slurry was coated on a copper foil current collector and then, dried and compressed to manufacture a negative electrode.

A polytetrafluoroethylene separator was utilized, and an electrolyte prepared by dissolving 1 M LiPF₆ in a mixed solvent of ethylene carbonate and dimethyl carbonate in a volume ratio of 3:7 was utilized, to manufacture a rechargeable lithium battery cell in a common method.

### Example 2

A positive electrode active material, a positive electrode, and a rechargeable lithium battery cell were manufactured substantially in substantially the same manner in Example 1 except that the second positive electrode active material was prepared by designing the content (e.g., amount) of the yttrium of the coating to be 0.2 mol% based on 100 mol% of the total metal excluding lithium in the final second positive electrode active material.

### Example 3

A positive electrode active material, a positive electrode, and a rechargeable lithium battery cell were manufactured substantially in substantially the same manner in Example 1 except that the second positive electrode active material was prepared by designing the content (e.g., amount) of the aluminium of the coating to be 0.2 mol% based on 100 mol% of the total metal excluding lithium in the final second positive electrode active material.

### Example 4

A positive electrode active material, a positive electrode, and a rechargeable lithium battery cell were manufactured substantially in substantially the same manner in Example 1 except that the second positive electrode active material was prepared by designing the content (e.g., amount) of the aluminium of the coating to be 0.6 mol% based on 100 mol% of the total metal excluding lithium in the final second positive electrode active material.

### Example 5

A positive electrode active material, a positive electrode, and a rechargeable lithium battery cell were manufactured substantially in substantially the same manner in Example 1 except that the first positive electrode active material was prepared by designing the content (e.g., amount) of the zirconium of the coating to be 0.1 mol% based on 100 mol% of the total metal excluding lithium in the final first positive electrode active material.

### Example 6

A positive electrode active material, a positive electrode, and a rechargeable lithium battery cell were manufactured substantially in substantially the same manner in Example 1 except that the first positive electrode active material was prepared by designing the content (e.g., amount) of the zirconium of the coating to be 0.3 mol% based on 100 mol% of the total metal excluding lithium in the final first positive electrode active material.

### Comparative Example 1

A positive electrode active material, a positive electrode, and a rechargeable lithium battery cell were manufactured substantially in substantially the same manner in Example 1 except that the second positive electrode active material was prepared by utilizing no yttrium oxide during the coating, i.e., no yttrium included in the coating layer.

### Comparative Example 2

A positive electrode active material, a positive electrode, and a rechargeable lithium battery cell were manufactured substantially in substantially the same manner in Example 1 except that the second positive electrode active material was prepared by designing the content (e.g., amount) of the yttrium of the coating to be 1.5 mol% based on 100 mol% of the total metal excluding lithium in the final second positive electrode active material.

### Comparative Example 3

A positive electrode active material, a positive electrode, and a rechargeable lithium battery cell were manufactured substantially in substantially the same manner in Example 1 except that the second positive electrode active material was prepared by utilizing no aluminium oxide during the coating, i.e., no aluminium included in the coating layer.

### Comparative Example 4

A positive electrode active material, a positive electrode, and a rechargeable lithium battery cell were manufactured substantially in substantially the same manner in Example 1 except that the second positive electrode active material was prepared by designing the content (e.g., amount) of the aluminium of the coating to be 3 mol% based on 100 mol% of the total metal excluding lithium in the final second positive electrode active material.

### Reference Example 1

A first positive electrode active material was prepared as follows. Ni_{0.75}Mn_{0.25}(OH)₂, LiOH, and Al₂O₃ were mixed in a molar ratio of 1:1:0.02 and then, heat-treated at 850 °C under an oxygen atmosphere for 8 hours to prepare a first composite oxide having a composition of LiNi_{0.75}Mn_{0.23}Al_{0.02}O₂ in the form of secondary particles with an average particle diameter (D₅₀) of about 14 µm. The first composite oxide was mixed with aluminium oxide powder and zirconium oxide powder and then, heat-treated at 825 °C under an oxygen atmosphere for 8 hours and dried to prepare the first positive electrode active material coated with Al and Zr.

A positive electrode active material, a positive electrode, and rechargeable lithium battery cell were manufactured substantially in substantially the same method as in Example 1 except that this first positive electrode active material was utilized to prepare the positive electrode active material.

### Reference Example 2

A positive electrode active material, a positive electrode, and a rechargeable lithium battery cell were manufactured substantially in substantially the same manner in Example 1 except that the first positive electrode active material was prepared by utilizing no aluminium sulfate during the coating, i.e., no aluminium included in the coating layer.

### Reference Example 3

A positive electrode active material, a positive electrode, and a rechargeable lithium battery cell were manufactured substantially in substantially the same manner in Example 1 except that the first positive electrode active material was prepared without coating with zirconium, that is, without adding zirconium oxide during the secondary heat treatment.

For better understanding, the design details of the positive electrode active materials of the examples, the comparative examples, and the reference examples are briefly shown in Table 1.

**(Table 1)**

| | First positive electrode active material | | | | Second positive electrode active material | | | 4.45 V capa city (mAh /g) | 4.45 V cycle-life (%, @50^{th} cycle) | Positi ve electr ode densi ty (g/cc) |
|---|---|---|---|---|---|---|---|---|---|---|
| | Precursor composition (Ni:Mn:Al) | Al doping (mol%) | Al coating (mol%) | Zr coa ting (mo l%) | Al dop ing (mo l%) | Al coa ting (mo l%) | Y coa ting (mo l%) | | | |
| Ex. 1 | 75:23:2 | - | 1.0 (wet) | 0.2 | 2.0 | 0.4 | 0.1 | 195.6 | 97.3 | 3.52 |
| Ex. 2 | 75:23:2 | - | 1.0 (wet) | 0.2 | 2.0 | 0.4 | 0.2 | 194.8 | 96.8 | 3.51 |
| Ex. 3 | 75:23:2 | - | 1.0 (wet) | 0.2 | 2.0 | 0.2 | 0.1 | 195.8 | 96.5 | 3.51 |
| Ex. 4 | 75:23:2 | - | 1.0 (wet) | 0.2 | 2.0 | 0.6 | 0.1 | 194.2 | 95.3 | 3.47 |
| Ex. 5 | 75:23:2 | - | 1.0 (wet) | 0.1 | 2.0 | 0.4 | 0.1 | 196.1 | 96.7 | 3.51 |
| Ex. 6 | 75:23:2 | - | 1.0 (wet) | 0.3 | 2.0 | 0.4 | 0.1 | 194.9 | 95.7 | 3.52 |
| Comp. Ex. 1 | 75:23:2 | - | 1.0 (wet) | 0.2 | 2.0 | 0.4 | 0 | 196.1 | 95.2 | 3.51 |
| Comp. Ex. 2 | 75:23:2 | - | 1.0 (wet) | 0.2 | 2.0 | 0.4 | 1.5 | 193.2 | 92.4 | 3.42 |
| Comp. Ex. 3 | 75:23:2 | - | 1.0 (wet) | 0.2 | 2.0 | 0 | 0.1 | 196.8 | 93.5 | 3.50 |
| Comp. Ex. 4 | 75:23:2 | - | 1.0 (wet) | 0.2 | 2.0 | 3 | 0.1 | 190.1 | 88.2 | 3.41 |
| Ref. Ex. 1 | 75:25 | 2 | 1.0 (dry) | 0.2 | 2.0 | 0.4 | 0.1 | 189.8 | 82.2 | 3.47 |
| Ref. Ex. 2 | 75:23:2 | - | 0 | 0.2 | 2.0 | 0.4 | 0.1 | 196.5 | 90.5 | 3.498 |
| Ref. Ex. 3 | 75:23:2 | - | 1.0 (wet) | 0 | 2.0 | 0.4 | 0.1 | 195.9 | 96.2 | 3.48 |

### Evaluation Example 1

Each of the rechargeable lithium battery cells obtained in Examples, Comparative Examples and Reference Examples was charged to 4.45 V at a constant current of 0.2 C and to 0.05 C at a constant voltage, discharged to a cut-off voltage of 3.0 V at 0.2 C at 25 °C to perform the initial charge and discharge to measure initial discharge capacity, and the results are shown in Table 1.

Subsequently, each of the cells was 50 times or more repeatedly charged at 1.0 C within a voltage range of 3.0 V to 4.45 V and discharged at 1.0 C at 45 °C to calculate a ratio of 50^{th} cycle discharge capacity to the initial discharge capacity, and the results are shown in Table 1.

In addition, the positive electrode active material layer density in each positive electrode in a pressed state of examples, comparative examples, and reference examples was measured, and the results are shown in Table 1.

Referring to Table 1, Examples each realize excellent or suitable initial discharge capacity and relatively high positive electrode density while maintaining or further improving cycle-life characteristics compared to the Comparative Examples.

In present disclosure, "not include a or any 'component'," "exclude a or any 'component'," "'component'-free," and/or the like refers to that the "component" not being added, selected or utilized as a component in the composition/element/structure, but, in some embodiments, the "component" of less than a suitable amount may still be included due to other impurities and/or external factors.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While the present disclosure has been described in connection with what is presently considered to be practical example embodiments, it is to be understood that present disclosure is not limited to the disclosed embodiments. In contrast, it is intended to cover one or more suitable modifications and included within the scope of the appended claims.

### Reference Numerals

| | | | |
|---|---|---|---|
| 100: | rechargeable lithium battery | 10: | positive electrode |
| 20: | negative electrode. | 30: | separator |
| 40: | electrode assembly | 50: | case |

## Claims

1. A positive electrode active material comprising
a first positive electrode active material comprising a lithium nickel-manganese composite oxide having a nickel content of greater than or equal to 60 mol% based on 100 mol% of a total metal excluding lithium in the first positive electrode active material and being in a form of a plurality of secondary particles each comprising a plurality of primary particles, and
a second positive electrode active material comprising a lithium nickel-manganese-based composite oxide having a nickel content of greater than or equal to 60 mol% based on 100 mol% of a total metal excluding lithium in the second positive electrode active material and being in a form of a plurality of single non-agglomerated particles
wherein the second positive electrode active material comprises a coating layer on a surface of each of the single particles and containing aluminium and yttrium, and
an aluminium content of the coating layer is 0.1 mol% to 2 mol% and an yttrium content of the coating layer is 0.1 mol% to 1 mol%, based on 100 mol% of a total metal excluding lithium in the second positive electrode active material, wherein,
based on a total weight, 100 wt%, of the first positive electrode active material and the second positive electrode active material,
the first positive electrode active material is in an amount of 60 wt% to 95 wt%, and
the second positive electrode active material is in an amount of 5 wt% to 40 wt%, and wherein
the lithium nickel-manganese composite oxide of the first positive electrode active material and the lithium nickel-manganese composite oxide of the second positive electrode active material are each independently represented by Chemical Formula 1:
Chemical Formula 1 Liₐ₁Niₓ₁Mn_{y1}Al_{z1}M¹_{w1}O_{2-b1}X_{b1},
in Chemical Formula 1,
0.9 ≤ a1 ≤ 1.8, 0.6 ≤ x1 ≤ 0.8, 0.1 ≤ y1 ≤ 0.4, 0 ≤ z1 ≤ 0.03, 0 ≤ w1 ≤ 0.3, 0.9 ≤ x1+y1+z1+w1 ≤ 1.1, 0 ≤ b1 ≤ 0.1,
M¹ being one or more elements selected from among B, Ba, Ca, Ce, Cr, Fe, Mg, Mo, Nb, Si, Sn, Sr, Ti, V, W, and Zr, and
X being one or more elements selected from among F, P, and S.

2. The positive electrode active material as claimed in claim 1, wherein,
an average particle diameter (D₅₀) of the secondary particles of the first positive electrode active material is larger than an average particle diameter (D₅₀) of the single particles of the second positive electrode active material.

3. The positive electrode active material as claimed in claim 1 or claim 2, wherein,
an average particle diameter (D₅₀) of the secondary particles of the first positive electrode active material is 10 µm to 20 µm, and
an average particle diameter (D₅₀) of the single particles of the second positive electrode active material is 0.5 µm to 8 µm.

4. The positive electrode active material as claimed in any one of claims 1 to 3, wherein,
the lithium nickel-manganese-based composite oxide of the first positive electrode active material and the lithium nickel-manganese-based composite oxide of the second positive electrode active material are the same or different, and each independently has a nickel content of 60 mol% to 80 mol% based on 100 mol% of a total metal excluding lithium in each respective lithium nickel-manganese-based composite oxide.

5. The positive electrode active material as claimed in any one of claims 1 to 4, wherein:
(i) the lithium nickel-manganese-based composite oxide of the first positive electrode active material and the lithium nickel-manganese-based composite oxide of the second positive electrode active material are each independently lithium nickel-manganese-aluminium-based composite oxide further comprising aluminium in addition to nickel and manganese, and
a content of aluminium in each respective lithium nickel-manganese-aluminium-based composite oxide is 1 mol% to 3 mol% based on 100 mol% of a total metal excluding lithium in each respective lithium nickel-manganese-aluminium-based composite oxide; and/or
(ii) the lithium nickel-manganese composite oxide of the first positive electrode active material and the lithium nickel-manganese composite oxide of the second positive electrode active material each independently have a cobalt content of 0 mol% to 0.01 mol%, based on 100 mol% of a total metal excluding lithium in each respective lithium nickel-manganese composite oxide.

6. The positive electrode active material as claimed in any one of claims 1 to 5, wherein,
in Chemical Formula 1, the positive electrode active material satisfies 0.6 ≤ x1 ≤ 0.8, 0.1 ≤ y1 ≤ 0.39, 0.01 ≤ z1 ≤ 0.03, and 0 ≤ w1 ≤ 0.29.

7. The positive electrode active material as claimed in any one of claims 1 to 6, wherein,
the first positive electrode active material further comprises a coating layer on a surface of each of the secondary particles and containing aluminium and zirconium.

8. The positive electrode active material as claimed in claim 7, wherein:
(i) an aluminium content of the coating layer is 0.1 mol% to 2 mol% based on 100 mol% of a total metal excluding lithium in the first positive electrode active material, and
a zirconium content of the coating layer is 0.05 mol% to 1 mol% based on 100 mol% of a total metal excluding lithium in the first positive electrode active material; and/or
(ii) an aluminium content of the coating layer of the first positive electrode active material is greater than the aluminium content of the coating layer of the second positive electrode active material, optionally wherein,
a molar ratio of the aluminium content of the coating layer of the first positive electrode active material to the aluminium content of the coating layer of the second positive electrode active material is 5:1 to 2:1.

9. The positive electrode active material as claimed in claim 7 or claim 8, wherein:
(i) the coating layer of the first positive electrode active material is in the form of a shell that continuously surrounds the surface of each of the secondary particles; and/or
(ii) a thickness of the coating layer of the first positive electrode active material is 30 nm to 500 nm.

10. The positive electrode active material as claimed in any one of claims 7 to 9, wherein:
(i) the coating layer of the first positive electrode active material further contains yttrium; and/or
(ii) the coating layer of the first positive electrode active material is on a surface of each of the primary particles inside each of the secondary particles and further comprises a grain boundary coating containing aluminium.

11. The positive electrode active material as claimed in any one of claims 1 to 10, wherein:
(i) the coating layer of the second positive electrode active material is in the form of a shell that continuously surrounds a surface of the single particle; and/or
(ii) a thickness of the coating layer of the second positive electrode active material is 30 nm to 500 nm.

12. The positive electrode active material as claimed in any one of claims 1 to 11, wherein:
(i) the aluminium exists in the form of a continuous film and yttrium exists in the form of islands in the coating layer of the second positive electrode active material; and/or
(ii) the second positive electrode active material comprises a first coating layer on the surface of each of the single particles and containing aluminium, and a second coating layer on the first coating layer and containing yttrium; and/or
(iii) the positive electrode active material does not contain sodium.

13. A positive electrode, comprising
a positive electrode current collector, and
a positive electrode active material layer on the positive electrode current collector, the positive electrode active material layer comprising the positive electrode active material as claimed in any one of claims 1 to 12, optionally wherein
the positive electrode active material layer has a density of 3.5 g/cc to 3.7 g/cc.

14. A rechargeable lithium battery, comprising
the positive electrode as claimed in claim 13,
negative electrode, and
an electrolyte.

## Patentansprüche

1. Positivelektroden-Aktivmaterial, umfassend
ein erstes Positivelektroden-Aktivmaterial, das ein Lithium-Nickel-Mangan-Verbundoxid umfasst, das einen Nickelgehalt von größer als oder gleich 60 Mol-%, auf 100 Mol-% eines Gesamtmetalls ohne Lithium in dem ersten Positivelektroden-Aktivmaterial bezogen, aufweist, und in Form einer Vielzahl von Sekundärpartikeln vorliegt, die jeweils eine Vielzahl von Primärpartikeln umfassen, und
ein zweites Positivelektroden-Aktivmaterial, das ein Lithium-Nickel-Manganbasiertes Verbundoxid umfasst, das einen Nickelgehalt von größer als oder gleich 60 Mol- %, auf 100 Mol-% eines Gesamtmetalls ohne Lithium in dem zweiten Positivelektroden-Aktivmaterial bezogen, aufweist und in Form einer Vielzahl von nicht agglomerierten Einzelpartikeln vorliegt,
wobei das zweite Positivelektroden-Aktivmaterial eine Beschichtungsschicht auf einer Oberfläche jedes der Einzelpartikel umfasst, die Aluminium und Yttrium enthält, und
ein Aluminiumgehalt der Beschichtungsschicht 0,1 Mol-% bis 2 Mol-% beträgt und ein Yttriumgehalt der Beschichtungsschicht 0,1 Mol-% bis 1 Mol-%, auf 100 Mol-% eines Gesamtmetalls ohne Lithium in dem zweiten Positivelektroden-Aktivmaterial bezogen, beträgt, wobei
auf ein Gesamtgewicht, 100 Gew.-%, des ersten Positivelektroden-Aktivmaterials und des zweiten Positivelektroden-Aktivmaterials bezogen,
das erste Positivelektroden-Aktivmaterial in einer Menge von 60 Gew.-% bis 95 Gew.-% vorliegt, und
das zweite Positivelektroden-Aktivmaterial in einer Menge von 5 Gew.-% bis 40 Gew.-% vorliegt, und wobei
das Lithium-Nickel-Mangan-Verbundoxid des ersten Positivelektroden-Aktivmaterials und das Lithium-Nickel-Mangan-Verbundoxid des zweiten Positivelektroden-Aktivmaterials jeweils unabhängig durch die chemische Formel 1 dargestellt sind:
Chemische Formel 1 Liₐ₁Niₓ₁Mn_{y1}Al_{z1}M¹_{w1}O_{2-b1}X_{b1},
in der chemischen Formel 1,
0,9≤a1≤1,8, 0,6≤x1≤0,8, 0,1≤y1≤0,4, 0≤z1≤0,03, 0≤w1≤0,3, 0,9≤x1+y1+z1+w1≤1,1, 0≤b1≤0,1,
wobei M¹ ein oder mehrere Elemente ist, ausgewählt aus B, Ba, Ca, Ce, Cr, Fe, Mg, Mo, Nb, Si, Sn, Sr, Ti, V, W und Zr, und
wobei X ein oder mehrere Elemente ist, ausgewählt aus F, P und S.

2. Positivelektroden-Aktivmaterial nach Anspruch 1, wobei
ein mittlerer Partikeldurchmesser (D₅₀) der Sekundärpartikel des ersten Positivelektroden-Aktivmaterials größer ist als ein mittlerer Partikeldurchmesser (D₅₀) der Einzelpartikel des zweiten Positivelektroden-Aktivmaterials.

3. Positivelektroden-Aktivmaterial nach Anspruch 1 oder Anspruch 2, wobei
ein mittlerer Partikeldurchmesser (D₅₀) der Sekundärpartikel des ersten Positivelektroden-Aktivmaterials 10 µm bis 20 µm beträgt, und
ein mittlerer Partikeldurchmesser (D₅₀) der Einzelpartikel des zweiten Positivelektroden-Aktivmaterials 0,5 µm bis 8 µm beträgt.

4. Positivelektroden-Aktivmaterial nach einem der Ansprüche 1 bis 3, wobei
das Lithium-Nickel-Mangan-basierte Verbundoxid des ersten Positivelektroden-Aktivmaterials und das Lithium-Nickel-Mangan-basierte Verbundoxid des zweiten Positivelektroden-Aktivmaterials gleich oder unterschiedlich sind und jeweils unabhängig einen Nickelgehalt von 60 Mol-% bis 80 Mol-%, auf 100 Mol-% eines Gesamtmetalls ohne Lithium in jedem jeweiligen Lithium-Nickel-Mangan-basierten Verbundoxid bezogen, aufweisen.

5. Positivelektroden-Aktivmaterial nach einem der Ansprüche 1 bis 4, wobei:
(i) das Lithium-Nickel-Mangan-basierte Verbundoxid des ersten Positivelektroden-Aktivmaterials und das Lithium-Nickel-Mangan-basierte Verbundoxid des zweiten Positivelektroden-Aktivmaterialsjeweils unabhängig Lithium-Nickel-Mangan-Aluminium-basiertes Verbundoxid sind, das zusätzlich zu Nickel und Mangan weiter Aluminium umfasst, und
ein Aluminiumgehalt in jedem jeweiligen Lithium-Nickel-Mangan-Aluminium-basierten Verbundoxid 1 Mol-% bis 3 Mol-%, auf 100 Mol-% eines Gesamtmetalls ohne Lithium in jedem jeweiligen Lithium-Nickel-Mangan-Aluminium-basierten Verbundoxid bezogen, beträgt; und/oder
(ii) das Lithium-Nickel-Mangan-Verbundoxid des ersten Positivelektroden-Aktivmaterials und das Lithium-Nickel-Mangan-Verbundoxid des zweiten Positivelektroden-Aktivmaterials jeweils unabhängig einen Kobaltgehalt von 0 Mol-% bis 0,01 Mol-%, auf 100 Mol-% eines Gesamtmetalls ohne Lithium in jedem jeweiligen Lithium-Nickel-Mangan-Verbundoxid bezogen, aufweisen.

6. Positivelektroden-Aktivmaterial nach einem der Ansprüche 1 bis 5, wobei
in der chemischen Formel 1 das Positivelektroden-Aktivmaterial 0,6≤x1≤0,8, 0,1≤y1≤0,39, 0,01≤z1≤0,03 und 0≤w1≤0,29 erfüllt.

7. Positivelektroden-Aktivmaterial nach einem der Ansprüche 1 bis 6, wobei
das erste Positivelektroden-Aktivmaterial weiter eine Beschichtungsschicht auf einer Oberfläche jedes der Sekundärpartikel umfasst, die Aluminium und Zirkonium enthält.

8. Positivelektroden-Aktivmaterial nach Anspruch 7, wobei:
(i) ein Aluminiumgehalt der Beschichtungsschicht 0,1 Mol-% bis 2 Mol-%, auf 100 Mol-% eines Gesamtmetalls ohne Lithium in dem ersten Positivelektroden-Aktivmaterial bezogen, beträgt, und
ein Zirkoniumgehalt der Beschichtungsschicht 0,05 Mol-% bis 1 Mol-%, auf 100 Mol- % eines Gesamtmetalls ohne Lithium in dem ersten Positivelektroden-Aktivmaterial bezogen, beträgt; und/oder
(ii) ein Aluminiumgehalt der Beschichtungsschicht des ersten Positivelektroden-Aktivmaterials größer ist als der Aluminiumgehalt der Beschichtungsschicht des zweiten Positivelektroden-Aktivmaterials, gegebenenfalls wobei
ein Molverhältnis des Aluminiumgehalts der Beschichtungsschicht des ersten Positivelektroden-Aktivmaterials zu dem Aluminiumgehalt der Beschichtungsschicht des zweiten Positivelektroden-Aktivmaterials 5:1 bis 2:1 beträgt.

9. Positivelektroden-Aktivmaterial nach Anspruch 7 oder Anspruch 8, wobei:
(i) die Beschichtungsschicht des ersten Positivelektroden-Aktivmaterials in Form einer Hülle vorliegt, die die Oberfläche jedes der Sekundärpartikel durchgehend umgibt; und/oder
(ii) eine Dicke der Beschichtungsschicht des ersten Positivelektroden-Aktivmaterials 30 nm bis 500 nm beträgt.

10. Positivelektroden-Aktivmaterial nach einem der Ansprüche 7 bis 9, wobei:
(i) die Beschichtungsschicht des ersten Positivelektroden-Aktivmaterials weiter Yttrium enthält; und/oder
(ii) die Beschichtungsschicht des ersten Positivelektroden-Aktivmaterials sich auf einer Oberfläche jedes der Primärpartikel im Inneren jedes der Sekundärpartikel befindet und weiter eine Korngrenzenbeschichtung umfasst, die Aluminium enthält.

11. Positivelektroden-Aktivmaterial nach einem der Ansprüche 1 bis 10, wobei:
(i) die Beschichtungsschicht des zweiten Positivelektroden-Aktivmaterials in Form einer Hülle vorliegt, die eine Oberfläche des Einzelpartikels durchgehend umgibt; und/oder
(ii) eine Dicke der Beschichtungsschicht des zweiten Positivelektroden-Aktivmaterials 30 nm bis 500 nm beträgt.

12. Positivelektroden-Aktivmaterial nach einem der Ansprüche 1 bis 11, wobei:
(i) das Aluminium in Form eines durchgehenden Films besteht und Yttrium in Form von Inseln in der Beschichtungsschicht des zweiten Positivelektroden-Aktivmaterials besteht; und/oder
(ii) das zweite Positivelektroden-Aktivmaterial eine erste Beschichtungsschicht auf der Oberfläche jedes der Einzelpartikel, die Aluminium enthält, und eine zweite Beschichtungsschicht auf der ersten Beschichtungsschicht, die Yttrium enthält, umfasst; und/oder
(iii) das Positivelektroden-Aktivmaterial kein Natrium enthält.

13. Positivelektrode, umfassend
einen Positivelektroden-Stromkollektor, und
eine Positivelektroden-Aktivmaterialschicht auf dem Positivelektroden-Stromkollektor, wobei die Positivelektroden-Aktivmaterialschicht das Positivelektroden-Aktivmaterial nach einem der Ansprüche 1 bis 12 umfasst, gegebenenfalls wobei
die Positivelektroden-Aktivmaterialschicht eine Dichte von 3,5 g/cc bis 3,7 g/cc aufweist.

14. Wiederaufladbare Lithiumbatterie, umfassend
die Positivelektrode nach Anspruch 13,
Negativelektrode, und
einen Elektrolyten.

## Revendications

1. Matériau actif d'électrode positive comprenant
un premier matériau actif d'électrode positive comprenant un oxyde composite à base de lithium-nickel-manganèse ayant une teneur en nickel supérieure ou égale à 60 % en moles sur la base de 100 % en moles d'un métal total, lithium exclu, dans le premier matériau actif d'électrode positive et se présentant sous la forme d'une pluralité de particules secondaires comprenant chacune une pluralité de particules primaires, et
un second matériau actif d'électrode positive comprenant un oxyde composite à base de lithium-nickel-manganèse ayant une teneur en nickel supérieure ou égale à 60 % en moles sur la base de 100 % en moles d'un métal total, lithium exclu, dans le second matériau actif d'électrode positive et se présentant sous la forme d'une pluralité de particules individuelles non agglomérées,
dans lequel le second matériau actif d'électrode positive comprend une couche de revêtement à la surface de chacune des particules individuelles et contenant de l'aluminium et de l'yttrium, et
une teneur en aluminium de la couche de revêtement est de 0,1 % en moles à 2 % en moles et une teneur en yttrium de la couche de revêtement est de 0,1 % en moles à 1 % en moles sur la base de 100 % en moles d'un métal total, lithium exclu, dans le second matériau actif d'électrode positive, dans lequel,
sur la base d'un poids total, 100 % en poids, du premier matériau actif d'électrode positive et du second matériau actif d'électrode positive,
le premier matériau actif d'électrode positive est présent en une quantité allant de 60 % en poids à 95 % en poids, et
le second matériau actif d'électrode positive est présent en une quantité allant de 5 % en poids à 40 % en poids, et dans lequel
l'oxyde composite à base de lithium-nickel-manganèse du premier matériau actif d'électrode positive et l'oxyde composite à base de lithium-nickel-manganèse du second matériau actif d'électrode positive sont représentés chacun indépendamment par la Formule Chimique 1 :
Formule Chimique 1 Liₐ₁ Niₓ₁ Mn_{y1} Al_{z1} M¹_{w1} O_{2-b1}X_{b1},
dans la Formule Chimique 1,
0,9 ≤ a1 ≤ 1,8, 0,6 ≤ x1 ≤ 0,8, 0,1 ≤ y1 ≤ 0,4, 0 ≤ z1 ≤ 0,03, 0 ≤ w1 ≤ 0,3, 0,9 ≤ x1 + y1 + z1 + w1 ≤ 1,1, 0 ≤ b1 ≤ 0,1,
M¹ étant un ou plusieurs éléments choisis parmi B, Ba, Ca, Ce, Cr, Fe, Mg, Mo, Nb, Si, Sn, Sr, Ti, V, W et Zr, et
X étant un ou plusieurs éléments choisis parmi F, P et S.

2. Matériau actif d'électrode positive selon la revendication 1, dans lequel,
un diamètre moyen de particules (D₅₀) des particules secondaires du premier matériau actif d'électrode positive est supérieur à un diamètre moyen de particules (D₅₀) des particules individuelles du second matériau actif d'électrode positive.

3. Matériau actif d'électrode positive selon la revendication 1 ou la revendication 2, dans lequel,
un diamètre moyen de particules (D₅₀) des particules secondaires du premier matériau actif d'électrode positive est de 10 µm à 20 µm, et
un diamètre moyen de particules (D₅₀) des particules individuelles du second matériau actif d'électrode positive est de 0,5 µm à 8 µm.

4. Matériau actif d'électrode positive selon l'une quelconque des revendications 1 à 3, dans lequel,
l'oxyde composite à base de lithium-nickel-manganèse du premier matériau actif d'électrode positive et l'oxyde composite à base de lithium-nickel-manganèse du second matériau actif d'électrode positive sont identiques ou différents, et chacun présente indépendamment une teneur en nickel de 60 à 80 % en moles sur la base de 100 % en moles d'un métal total, lithium exclu, dans chaque oxyde composite respectif à base de lithium-nickel-manganèse.

5. Matériau actif d'électrode positive selon l'une quelconque des revendications 1 à 4, dans lequel :
(i) l'oxyde composite à base de lithium-nickel-manganèse du premier matériau actif d'électrode positive et l'oxyde composite à base de lithium-nickel-manganèse du second matériau actif d'électrode positive sont chacun indépendamment un oxyde composite à base de lithium-nickel-manganèse-aluminium comprenant en outre de l'aluminium en plus du nickel et du manganèse, et
la teneur en aluminium dans chaque oxyde composite respectif à base de lithium-nickel-manganèse-aluminium est de 1 % en moles à 3 % en moles sur la base de 100 % en moles d'un métal total, lithium exclu, dans chaque oxyde composite respectif à base de lithium-nickel-manganèse-aluminium ; et/ou
(ii) l'oxyde composite à base de lithium-nickel-manganèse du premier matériau actif d'électrode positive et l'oxyde composite à base de lithium-nickel-manganèse du second matériau actif d'électrode positive présentent chacun indépendamment une teneur en cobalt de 0 % en moles à 0,01 % en moles, sur la base de 100 % en moles d'un métal total lithium exclu, dans chaque oxyde composite respectif à base de lithium-nickel-manganèse.

6. Matériau actif d'électrode positive selon l'une quelconque des revendications 1 à 5, dans lequel,
dans la Formule Chimique 1, le matériau actif d'électrode positive satisfait 0,6 ≤ x1 ≤ 0,8, 0,1 ≤ y1 ≤ 0,39, 0,01 ≤ z1 ≤ 0,03 et 0 ≤ w1 ≤ 0,29.

7. Matériau actif d'électrode positive selon l'une quelconque des revendications 1 à 6, dans lequel,
le premier matériau actif d'électrode positive comprend en outre une couche de revêtement à la surface de chacune des particules secondaires et contenant de l'aluminium et du zirconium.

8. Matériau actif d'électrode positive selon la revendication 7, dans lequel :
(i) une teneur en aluminium de la couche de revêtement est de 0,1 % en moles à 2 % en moles sur la base de 100 % en moles d'un métal total, lithium exclu, dans le premier matériau actif d'électrode positive, et
une teneur en zirconium de la couche de revêtement est de 0,05 % en moles à 1 % en moles sur la base de 100 % en moles d'un métal total, lithium exclu, dans le premier matériau actif de d'électrode positive ; et/ou
(ii) une teneur en aluminium de la couche de revêtement du premier matériau actif d'électrode positive est supérieure à la teneur en aluminium de la couche de revêtement du second matériau actif d'électrode positive, facultativement dans lequel
un rapport molaire de la teneur en aluminium de la couche de revêtement du premier matériau actif d'électrode positive à la teneur en aluminium de la couche de revêtement du second matériau actif d'électrode positive est de 5:1 à 2:1.

9. Matériau actif d'électrode positive selon la revendication 7 ou la revendication 8, dans lequel :
(i) la couche de revêtement du premier matériau actif d'électrode positive se présente sous la forme d'une enveloppe qui entoure en continu la surface de chacune des particules secondaires ; et/ou
(ii) une épaisseur de la couche de revêtement du premier matériau actif d'électrode positive est de 30 nm à 500 nm.

10. Matériau actif d'électrode positive selon l'une quelconque des revendications 7 à 9, dans lequel :
(i) la couche de revêtement du premier matériau actif d'électrode positive contient en outre de l'yttrium ; et/ou
(ii) la couche de revêtement du premier matériau actif d'électrode positive se trouve sur une surface de chacune des particules primaires à l'intérieur de chacune des particules secondaires et comprend en outre un revêtement de joints de grains contenant de l'aluminium.

11. Matériau actif d'électrode positive selon l'une quelconque des revendications 1 à 10, dans lequel :
(i) la couche de revêtement du second matériau actif d'électrode positive se présente sous la forme d'une enveloppe qui entoure en continu une surface de la particule individuelle ; et/ou
(ii) une épaisseur de la couche de revêtement du second matériau actif d'électrode positive est de 30 nm à 500 nm.

12. Matériau actif d'électrode positive selon l'une quelconque des revendications 1 à 11, dans lequel :
(i) l'aluminium se présente sous la forme d'un film continu et l'yttrium se présente sous la forme d'îlots dans la couche de revêtement du second matériau actif d'électrode positive ; et/ou
(ii) le second matériau actif d'électrode positive comprend une première couche de revêtement à la surface de chacune des particules individuelles et contenant de l'aluminium, et une seconde couche de revêtement sur la première couche de revêtement et contenant de l'yttrium ; et/ou
(iii) le matériau actif d'électrode positive ne contient pas de sodium.

13. Électrode positive, comprenant
un collecteur de courant d'électrode positive, et
une couche de matériau actif d'électrode positive sur le collecteur de courant d'électrode positive, la couche de matériau actif d'électrode positive comprenant le matériau actif d'électrode positive selon l'une quelconque des revendications 1 à 12, facultativement dans laquelle
la couche de matériau actif d'électrode positive présente une densité de 3,5 g/cc à 3,7 g/cc.

14. Batterie au lithium rechargeable, comprenant
l'électrode positive selon la revendication 13,
une électrode négative, et
un électrolyte.
